# EUROPEAN PATENT APPLICATION

(11) **EP 2 475 172 A2**
(43) Date of publication of application: **11.07.2012**
(21) Application number: 11179578.7
(22) Date of filing: 31.08.2011
(51) Int. Cl.: H04N 7/26, H04N 7/50

(54) **Video processing apparatus capable of dynamically controlling processed picture quality based on runtime memory bandwidth utilization**

(30) Priority: 05.01.2011 US 429789 P; 15.08.2011 US 210297
(71) Applicant: MediaTek, Inc, Hsin-Chu 300 (TW)
(72) Inventor: Chen, Wei-Jen, 251 Danshuei Township, Taipei County (TW)
(74) Representative: 2K Patentanwälte Blasberg Kewitz & Reichel

(57) **Abstract**

A video processing apparatus is provided. A storage medium is operative to store multimedia data. A model design module is operative to determine a module factor according to a format of the multimedia data, monitor an amount of runtime bandwidth utilization of the storage medium, and dynamically adjust the module factor according to the amount of runtime bandwidth utilization of the storage medium. A PQ control module is operative to access the storage medium to process the multimedia data according to the module factor and output processed multimedia data.

## Description

### Cross reference to related Applications

This application claims the benefit of U.S. Provisional Application No. 61/429,789 filed 2011/01/05 and entitled "Dynamic PQ Base on Runtime DRAM Bandwidth". The entire contents of which are hereby incorporated by reference.

### BACKGROUND of the invention

### Field of the Invention

The invention relates to a video processing apparatus, and more particularly to a video processing apparatus capable of dynamically controlling processed picture quality based on runtime memory bandwidth utilization.

### Description of the Related Art

As TV technology has developed from analog TV to digital TV, TVs have tended to be remarkably advanced in their technology, and now have higher definitions, higher resolutions and are more multi-functional. For example, along with the advancements in DTV technology, more and more applications, other than just displaying TV programs, such as Web browsing, have been developed for a TV set.

Conventionally, when the format of an input data source is determined, picture quality (PQ) is decided, accordingly. After that, the PQ cannot be changed. However, sometimes, users may prefer to use one or more applications while watching TV programs. For example, a user may want to access the internet and browse homepages while watching TV programs. As the type of applications supported by a TV set increase, the functions which are simultaneously being turned on by a user while watching TV programs may also accordingly increase. Accordingly, the bandwidth consumption required by data access at the same time may greatly increase, and cause a lag in displaying of TV programs, thus being undesirable for users.

Therefore, a novel architecture and method for dynamically control PQ base on a runtime bandwidth requirement is proposed.

### Brief Summary of the Invention

Video processing apparatuses and video processing methods are provided. An embodiment of a video processing apparatus comprises a storage medium, a model design module and a PQ control module. The storage medium is operative to store multimedia data. The model design module is operative to determine a module factor according to a format of the multimedia data, monitor an amount of runtime bandwidth utilization of the storage medium, and dynamically adjust the module factor according to the amount of runtime bandwidth utilization of the storage medium. The PQ control module is operative to access the storage medium to process the multimedia data according to the module factor and output processed multimedia data.

An embodiment of a video processing method comprises: determining a module factor according to a format of multimedia data to be processed; monitoring an amount of runtime bandwidth utilization of a storage medium for storing the multimedia data and dynamically adjusting the module factor according to the amount of runtime bandwidth utilization of the storage medium; and processing the multimedia data according to the module factor to output processed multimedia data.

Another embodiment of a video processing method comprises: determining a module factor according to a format of multimedia data to be processed; dynamically adjusting the module factor according to an amount of runtime bandwidth utilization of a storage medium; and processing the multimedia data according to the module factor to output processed multimedia data. When the module factor is increased, the processed multimedia data has a higher picture quality, and when the module factor is decreased, the processed multimedia data has a lower picture quality.

A detailed description is given in the following embodiments with reference to the accompanying drawings.

### BRIEF DESCRIPTION OF DRAWINGS

The invention can be more fully understood by reading the subsequent detailed description and examples with references made to the accompanying drawings, wherein:

FIG. 1 shows a block diagram of a video processing apparatus according to an embodiment of the invention;

FIG. 2 shows an exemplary block diagram of a PQ control module according to an embodiment of the invention;

FIG. 3 shows a flow chart of a video processing method according to an embodiment of the invention; and

FIG. 4 shows an exemplary flow chart of dynamic adjustment of the module factor according to an embodiment of the invention.

### Detailed Description of the Invention

The following description is of the best-contemplated mode of carrying out the invention. This description is made for the purpose of illustrating the general principles of the invention and should not be taken in a limiting sense. The scope of the invention is best determined by reference to the appended claims.

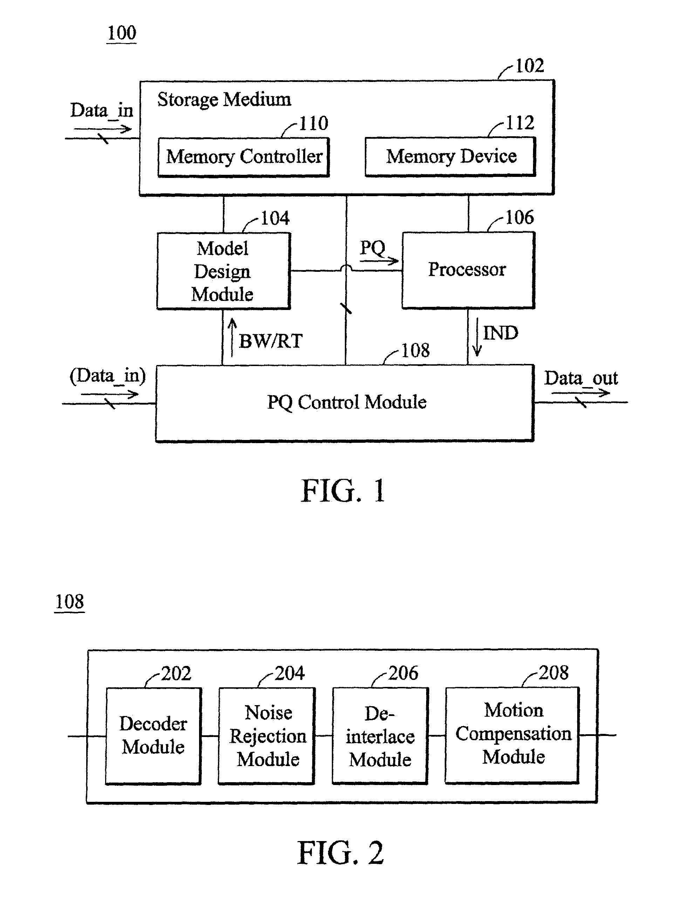

FIG. 1 shows a block diagram of a video processing apparatus according to an embodiment of the invention. The video processing apparatus 100 may comprise a storage medium 102, a model design module 104, a processor 106 and a picture quality (PQ) control module 108. The storage medium 102 may comprise a memory device 112 and a memory controller 110 for controlling operations of the memory device 112. The PQ control module 108 may comprise a plurality of image processing units (as shown in FIG. 2). Note that, in order to clarify the concept of the invention, FIG. 1 presents a simplified block diagram, in which only the elements relevant to the invention are shown. However, as one of ordinary skill in the art will readily appreciate, the video processing apparatus may further comprise one or more hardware, firmware and/or software modules, and the invention should not be limited to what is shown in the FIG. 1.

According to an embodiment of the invention, the video processing apparatus may receive input multimedia data Data_in from an external data source (not shown in FIG. 1), such as a host, a graphic processing unit (GPU), a TV cable, a tuner, an external USB storage device, or others. Depending on different system requirements, the input multimedia data Data_in may be passed directly to the storage medium 102, or passed to the PQ control module 108 for being processed in advance. For example, the PQ control module 108 may first receive the input multimedia data Data_in, decode the input multimedia data Data_in, and store the decoded multimedia data in the storage medium 102 for further processing. For another example, when the decoding is not required, the input multimedia data Data_in may be passed directly to and stored in the storage medium 102 for being further processed by the PQ control module 108. The storage medium 102 may be, for example, and not limited to, a DRAM device.

According to an embodiment of the invention, the PQ control module 108 is operative to enhance the picture quality of the input multimedia data Data_in and generate processed multimedia data Data_out. The PQ control module 108 may comprise a plurality of image processing units for processing the input multimedia data Data_in. FIG. 2 shows an exemplary block diagram of a PQ control module according to an embodiment of the invention. The PQ control module 108 as shown in FIG. 2 may comprise a decoder module 202, a noise rejection (NR) module 204, a de-interlace (DI) module 206 and a motion compensation (MC) module 208. The decoder module 202 is operative to decode the multimedia data Data_in. The noise rejection module 204 is operative to filter out unwanted noise in the decoded multimedia data. The de-interlace module 206 is operative to de-interlace the filtered multimedia data. The motion compensation module 208 is operative to perform motion compensation on the de-interlaced multimedia data. Note that FIG. 2 is an exemplary block diagram in which only a few image processing units are shown. As one of ordinary skill in the art will readily appreciate, the PQ control module may further comprise other image processing units utilized for enhancing the picture quality of the input multimedia data Data_in, and the invention should not be limited to what is shown in the FIG. 2.

According to an embodiment of the invention, during the image processing procedures, the multimedia data may be buffered in the storage medium 102 and accessed by the image processing units of the PQ control module 108. To be more specific, according to an embodiment of the invention, the input multimedia data Data_in may be a plurality of image frames, or video stream data comprising a sequence of image frames, or others, and the image frames being or to be processed by the image processing units may be buffered in the storage medium 102. Therefore, the storage medium 102 may be accessed by one or more of the image processing units while the multimedia data is being processed. For example, the de-interlace module 206 may perform a 1W3R (1 write and 3 read) de-interlace procedure on the multimedia data, by which three frames (e.g. F1, F2 and F3) buffered in the storage medium 102 may be read out as the reference image data for de-interlacing one frame (e.g. F4), and the de-interlaced frame F4 will be written back to the storage medium 102 as the reference image data for forthcoming frames.

Referring back to FIG. 1, according to an embodiment of the invention, after the input multimedia data Data_in has been received, the model design module 104 is operative to select a proper image processing model for processing the input multimedia data Data_in according to a format of the multimedia data and accordingly, and determine a module factor PQ for representing a desired picture quality corresponding to the selected image processing model. As previously described, the input multimedia data Data_in may be a plurality of image frames, or video stream data comprising a sequence of image frames, or others. The input multimedia data Data_in may be encoded according to, for example, and not limited to, the JPEG standard, the H.264 standard, the MPEG1/2 standard,... or others for different encoding standards, different image processing models may be applied so that the processed multimedia data Data_out is provided with the best picture quality. According to an embodiment of the invention, the image processing model may define one or more image processing procedures required for processing the corresponding multimedia data. Therefore, the image processing units of the PQ control module 108 may be determined to be turned on or off according to the selected image processing model.

According to an embodiment of the invention, the model design module 104 may select a proper image processing model for processing the input multimedia data Data_in according to the decoding format of the input multimedia data Data_in, and accordingly determine the module factor corresponding to the selected image processing model. According to the embodiment of the invention, the module factor may be regarded as an indicator for indicating the desired picture quality of the processed multimedia data Data_out. Generally, a higher module factor may represent that more image processing units should be turned on and/or more advanced or powerful image processing algorithm should be applied by the image processing units for processing the input multimedia data Data_in, so that processed multimedia data Data_out with higher picture quality may be provided.

Take the PQ control module shown in FIG. 2 as an example, the model design module 104 may determine to use a first image processing model M1 and a module factor PQ1 I for processing multimedia data encoded by MPEG 1. The first image processing model M1 may be NR+DI(1W1R), which defines that the noise rejection module 204 and the de-interlace module 206 should be turned on, and the motion compensation module 208 that is not required should be turned off In addition, the de-interlace module 206 may perform a 1W1R (1 write and 1 read) de-interlace procedure on the multimedia data. For another example, the model design module 104 may also determine to use a second image processing model M2 and a module factor PQ2 for processing multimedia data encoded by MPEG 2. The second image processing model M2 may be NR+DI(1W3R), which defines that the noise rejection module 204 and the de-interlace module 206 should be turned on, and the motion compensation module 208 that is not required should be turned off. In addition, the de-interlace module 206 may perform a 1W3R (1 write and 3 read) de-interlace procedure on the multimedia data, which may provide a higher picture quality than the 1W1R de-interlace because the number of reference frames is increased, and therefore, the module factor PQ2 is higher than PQ 1.

For yet another example, the model design module 104 may also determine to use a third image processing model M3 and a module factor PQ3 for processing multimedia data encoded by MPEG 4. The third image processing model M3 may be NR+DI(1W3R)+MC, which defines that the noise rejection module 204, the de-interlace module 206 and the motion compensation module 208 should be turned on. In addition, the de-interlace module 206 may perform a 1W3R (1 write and 3 read) de-interlace procedure on the multimedia data. Since the motion compensation module 208 is also turned on for performing motion compensation on the de-interlaced multimedia data, the module factor PQ3 is higher than PQ1 and PQ2.

According to an embodiment of the invention, the image processing model and module factor may be dynamically adjusted based on an amount of runtime bandwidth requirement and/or required image processing time of the image processing units. Note that in the application, the amount of bandwidth utilization of the storage medium 102 may be defined as the amount of data being accessed per second. In one embodiment, the model design module 104 may be operative to monitor an amount of runtime bandwidth utilization of the storage medium 102, and dynamically adjust the module factor according to the amount of runtime bandwidth utilization of the storage medium 102. The processor 106 may be operative to receive the module factor PQ, determine which image processing unit(s) of the PQ control module 108 should be turned on or off according to the received module factor PQ, and thereby generate a PQ indication signal IND for controlling the image processing units. The image processing units may be turned on or off in response to the PQ indication signal IND. Note that in some embodiments, the PQ control module 108 may also be operative to directly control the image processing units to be turned on or off according to the module factor PQ or the PQ indication signal IND.

In some embodiments, the model design module 104 may first obtain a predetermined amount of bandwidth utilization of the storage medium 102 according to the initially determined image processing model. As previously described, the model design module 104 may determine the image processing model for processing the input multimedia data Data_in according to the decoding format of the multimedia data. The image processing model may define which image processing units should be turned on for processing the input multimedia data Data_in. Note that each image processing unit may have a theoretical amount of bandwidth utilization for processing the multimedia data. The theoretical amount of bandwidth utilization may be obtained from experimental results, or a maximum amount recorded previously. For example, the amount of data required by performing the 1W3R de-interlace may be 4 frames, where one image frame may comprise 1MByte of data. Therefore, the theoretical amount of bandwidth required for accessing data from the storage medium 102 for performing 1 W3R de-interlace operation may be 1M*4*30Hz(frame rate)=120MHz. After obtaining the theoretical amount of bandwidth utilization of each image processing unit to be turned on in the initially determined image processing model, the corresponding predetermined amount of bandwidth utilization may be obtained by summing up the theoretical amounts of bandwidth utilization.

Once the predetermined amount of bandwidth utilization is obtained, the model design module 104 may further monitor an amount of runtime bandwidth utilization of the storage medium 102, which reveals the actual bandwidth utilization of the storage medium 102 while processing the multimedia data, and dynamically adjust the module factor according to the amount of runtime bandwidth utilization of the storage medium 102. According to an embodiment of the invention, the one or more of the turned on image processing units may report their runtime bandwidth utilization BW to the model design module 104. The model design module 104 may further determine whether to change the module factor according to the amount of reported runtime bandwidth utilization. When the amount of reported runtime bandwidth utilization has exceeded a predetermined upper threshold, the model design module 104 may decrease the module factor, and when the amount of reported runtime bandwidth utilization has not exceeded a predetermined lower threshold, the model design module 104 may increase the module factor.

For example, suppose that the initially determined image processing model for processing a H.264 multimedia data is NR+DI(1W1R), and the predetermined amount of bandwidth utilization corresponding to the initially determined image processing model is 420MHz. After the image processing procedures begin, the obtained amount of runtime bandwidth utilization of the storage medium 102 is 350MHz, which means that 70MHz of unused bandwidth may be further utilized to achieve better picture quality. Therefore, the model design module 104 may increase the module factor and/or adjust the image processing model. By increasing the module factor, more image processing units may be determined to be turned on and/or a more advanced or powerful image processing algorithm may be applied by the image processing units, for providing the processed multimedia data Data_out with higher picture.

For example, suppose that the theoretical amount of bandwidth utilization of DI(1W1R) for de-interlacing H.264 multimedia data is 133MHz, and the theoretical amount of bandwidth utilization of DI(1W3R) for de-interlacing H.264 multimedia data is 188MHz. Since the difference between the two theoretical amounts does not exceed 70MHz, the image processing model for processing the H.264 multimedia data may be changed to NR+DI(1W3R) to achieve better picture quality. For another example, suppose that the theoretical amount of bandwidth utilization required by performing motion compensation is 70MHz. The image processing model for processing the H.264 multimedia data may also be changed to NR+DI(1W1R)+MC to achieve higher picture quality.

According to another embodiment of the invention, the image processing units may also be operative to report a required image processing time RT to the model design module 104. The required image processing time RT may be the time required for processing one frame or one field (e.g. the odd/even lines in one frame) of the multimedia data. The model design module 104 may further be operative to monitor the required image processing time RT and dynamically adjust the module factor according to the amount of runtime bandwidth utilization of the storage medium and/or the required image processing time. The concept of dynamic adjustment of the module factor according to the required image processing time is to improve picture quality of the multimedia data as much as possible by increasing the module factor, while avoiding any lag in output of the processed multimedia data Data_out when the module factor is increased. For example, for a multimedia data with a frame rate of 30Hz, the required image processing time for processing one frame which would not cause a lag should be less than 1/30sec. As more image processing units are turned on, system loading is increased, and the required image processing time would be increased, accordingly. Therefore, the trade off between picture quality and image processing time is a factor which should be of concern, for the model design module 104, when determining the module factor.

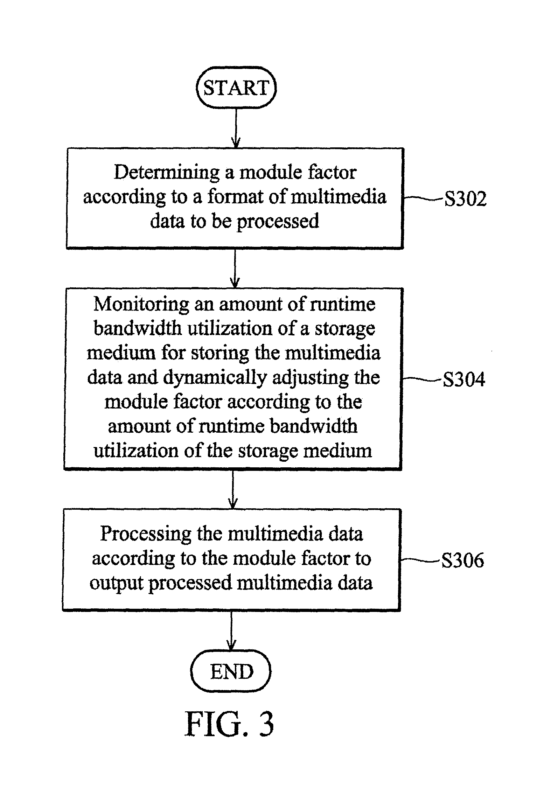

In conclusion, FIG. 3 shows a flow chart of a video processing method according to an embodiment of the invention. To begin, a module factor may be determined by the module design module 104 according to a format of multimedia data to be processed (Step S302). Next, the module design module 104 may monitor an amount of runtime bandwidth utilization of a storage medium for storing the multimedia data and dynamically adjust the module factor according to the amount of runtime bandwidth utilization of the storage medium (Step S304). Note that according to another embodiment of the invention, the image processing time may also be monitored by the module design module 104 and may be regarded as a reference for adjusting the module factor. Finally, the PQ control module 108 may process the multimedia data according to the module factor to output processed multimedia data (Step S306).

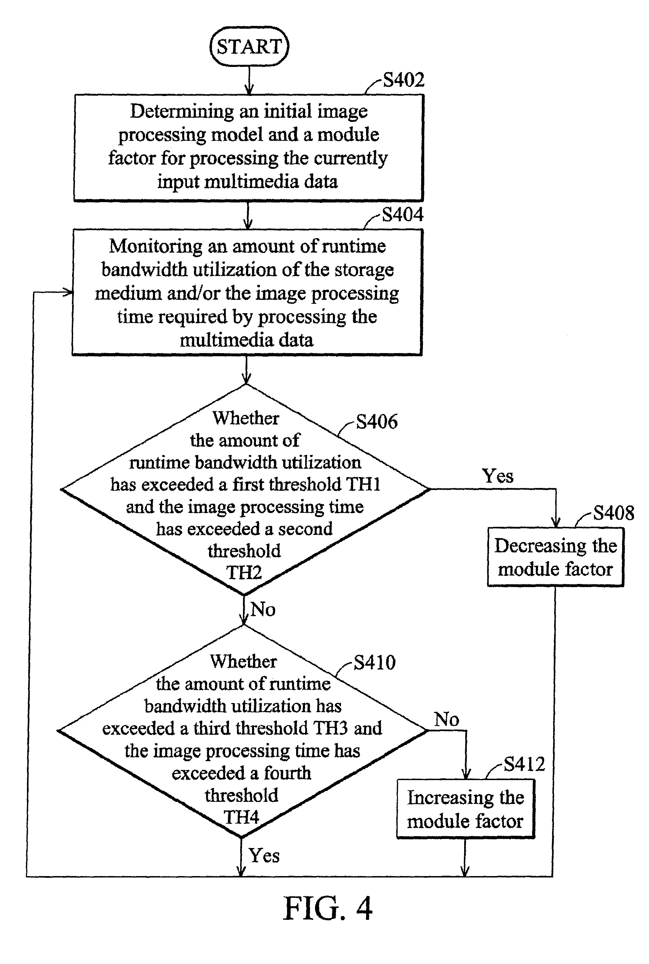

FIG. 4 shows an exemplary flow chart of dynamic adjustment of the module factor according to an embodiment of the invention. To begin, the model design module 104 may first determine an initial image processing model and a module factor for processing newly input multimedia data (Step S402). Next, the model design module 104 may monitor an amount of runtime bandwidth utilization of the storage medium and/or the image processing time required for processing the newly input multimedia data (Step S404). Next, the model design module 104 may determine whether the amount of runtime bandwidth utilization has exceeded a first threshold TH1 and the image processing time has exceeded a second threshold TH2 (Step S406). According to an embodiment of the invention, the first threshold TH1 may be the predetermined amount of bandwidth utilization corresponding to the initial image processing model. According to another embodiment of the invention, the first threshold TH1 may be a percentage of a maximum possible bandwidth utilization value of the storage medium. For example, the first threshold TH1 may be selected as 60% of the maximum possible bandwidth utilization value of the storage medium 102. Information regarding the maximum possible bandwidth utilization value of the storage medium 102 may be obtained from the memory controller 110 of the storage medium 102. According to yet another embodiment of the invention, the second threshold TH2 may be a predetermined time which would not cause a lag in the output of the processed multimedia data Data_out.

When the amount of runtime bandwidth utilization has exceeded the first threshold TH1 and the image processing time has exceeded the second threshold TH2, the model design module 104 may determine to decrease the module factor (Step S408). As previously, when the module factor is decreased, the image processing model may be changed, accordingly, so as to turn off some image processing units and/or apply a less advanced or less powerful image processing algorithm. On the other hand, when the amount of runtime bandwidth utilization has not exceeded the first threshold TH1 and/or the image processing time has not exceeded the second threshold TH2, the model design module 104 may further determine whether the amount of runtime bandwidth utilization has exceeded a third threshold TH3 and the image processing time has exceeded a fourth threshold TH4 (Step S410). The third threshold TH3 and fourth threshold TH4 may be selected as the lower boundaries of the bandwidth utilization and the image processing time and therefore, the third threshold TH3 and fourth threshold TH4 may be respectively lower than the first threshold TH1 and second threshold TH2. When the amount of runtime bandwidth utilization has exceeded the third threshold TH3 and the image processing time has exceeded the fourth threshold TH4, the model design module 104 may keep monitoring the amount of runtime bandwidth utilization of the storage medium and/or the image processing time required by processing the multimedia data (Step S404), until the multimedia data processing operation is completed. When the amount of runtime bandwidth utilization has not exceeded the third threshold TH3 and/or the image processing time has not exceeded the fourth threshold TH4, the model design module 104 may determine to increase the module factor (Step S412).

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A video processing apparatus (100), comprising:
a storage medium (102) operative to store multimedia data;
a model design module (104), operative to determine a module factor according to a format of the multimedia data, monitor an amount of runtime bandwidth utilization of the storage medium, and dynamically adjust the module factor according to the amount of runtime bandwidth utilization of the storage medium; and
a PQ control module (108), operative to access the storage medium to process the multimedia data according to the module factor and output processed multimedia data.

2. The video processing apparatus as claimed in claim 1, further comprising:
a processor (106), operative to receive the module factor from the model design module and generate a PQ indication signal according to the module factor.

3. The video processing apparatus as claimed in claim 2, wherein the PQ control module comprises a plurality of image processing units for processing the multimedia data, and the image processing units are turned on or off in response to the PQ indication signal.

4. The video processing apparatus as claimed in claim 3, wherein one or more of the turned on image processing units is/are operative to access the storage medium when processing the multimedia data, and report the amount of runtime bandwidth utilization of the storage medium to the model design module.

5. The video processing apparatus as claimed in claim 4, wherein the model design module is further operative to determine whether to increase or decrease the module factor according to the amount of runtime bandwidth utilization of the storage medium, and when the amount of runtime bandwidth utilization of the storage medium has exceeded a predetermined upper threshold, the model design module decreases the module factor, and when the runtime bandwidth utilization of the storage medium has not exceeded a predetermined lower threshold, the model design module increases the module factor.

6. The video processing apparatus as claimed in claim 5, wherein the processor is further operative to determine whether the image processing units should be turned on or off according to the received module factor, and thereby generate the PQ indication signal.

7. The video processing apparatus as claimed in any of the claims 3 to 6, wherein the image processing units are further operative to report a required image processing time to the model design module, and the model design module is further operative to dynamically adjust the module factor according to the amount of runtime bandwidth utilization of the storage medium and the required image processing time.

8. The video processing apparatus as claimed in claim 7, wherein the model design module is further operative to determine whether to increase or decrease the module factor according to the amount of runtime bandwidth utilization of the storage medium and the required image processing time, and when the amount of runtime bandwidth utilization of the storage medium and/or the required image processing time have exceeded a predetermined upper threshold, the model design module decreases the module factor, and when the amount of runtime bandwidth utilization of the storage medium and/or the required image processing time have not exceeded a predetermined lower threshold, the model design module increases the module factor.

9. The video processing apparatus as claimed in claim 8, wherein the processor is further operative to determine whether the image processing units should be turned on or off according to the received module factor, and thereby generate the PQ indication signal.

10. A video processing method, comprising:
determining a module factor (S302) according to a format of multimedia data to be processed;
monitoring (S304) an amount of runtime bandwidth utilization of a storage medium for storing the multimedia data and dynamically adjusting the module factor according to the amount of runtime bandwidth utilization of the storage medium; and
processing (S306) the multimedia data according to the module factor to output processed multimedia data.

11. The video processing method as claimed in claim 10, further comprising:
decreasing the module factor when the amount of runtime bandwidth utilization of the storage medium has exceeded a predetermined upper threshold; and
increasing the module factor when the amount of runtime bandwidth utilization of the storage medium has not exceeded a predetermined lower threshold.

12. The video processing method as claimed in claim 10 or 11, further comprising:
turning on or off a plurality of image processing units utilized for processing the multimedia data according to the module factor, wherein the storage medium is accessed by the image processing units when processing the multimedia data.

13. The video processing method as claimed in any of the claims 10 to 12, further comprising:
monitoring required image processing time of the image processing units; and dynamically adjusting the module factor further according to the required image processing time.

14. The video processing method as claimed in claim 13, further comprising:
decreasing the module factor when the amount of runtime bandwidth utilization of the storage medium and/or the required image processing time have exceeded a predetermined upper threshold; and
increasing the module factor when the amount of runtime bandwidth utilization of the storage medium and/or the required image processing time have not exceeded a predetermined lower threshold.

15. The video processing method as claimed in claim 14, further comprising:
turning on or off a plurality of image processing units utilized for processing the multimedia data according to the module factor, wherein the storage medium is accessed by the image processing units when processing the multimedia data.
